(19) Europäisches Patentamt
European Patent Office
Office européen des brevets

(11) **EP 3 019 448 B1**

(12) **EUROPÄISCHE PATENTSCHRIFT**

(45) Veröffentlichungstag und Bekanntmachung des Hinweises auf die Patenterteilung:
**18.10.2017 Patentblatt 2017/42**

(21) Anmeldenummer: **14731584.0**

(22) Anmeldetag: **13.06.2014**

(51) Int Cl.:
*C01G 23/07* (2006.01)   *C01B 33/18* (2006.01)
*C01D 1/02* (2006.01)   *C01B 13/20* (2006.01)
*C01B 13/24* (2006.01)   *C01F 7/30* (2006.01)

(86) Internationale Anmeldenummer:
**PCT/EP2014/062300**

(87) Internationale Veröffentlichungsnummer:
**WO 2015/003871 (15.01.2015 Gazette 2015/02)**

(54) **VERFAHREN ZUR HERSTELLUNG VON METALLOXIDEN**

METHOD FOR THE PREPARATION OF METAL OXIDES

PROCÉDÉ DE FABRICATION D'OXYDES MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2013 EP 13176126**

(43) Veröffentlichungstag der Anmeldung:
**18.05.2016 Patentblatt 2016/20**

(73) Patentinhaber: **Evonik Degussa GmbH**
**45128 Essen (DE)**

(72) Erfinder:
• SCHULZE ISFORT, Christian
B-2950 Kapellen (BE)
• HAGEMANN, Michael
63796 Kahl (DE)

(56) Entgegenhaltungen:
EP-A1- 1 302 236   DE-A1- 2 048 220
DE-A1- 10 210 189   US-A- 3 363 980

**Beschreibung**

Die Erfindung betrifft ein pyrogenes Verfahren zur Herstellung von Metalloxiden, bei dem die Einsatzstoffe vor dem Eintritt in eine Reaktionskammer mittels statischer Mischelemente gemischt werden.

Die Flammenhydrolyse wird seit langem zur großtechnischen Herstellung von Metalloxiden benutzt. Bei der Flammenhydrolyse wird in der Regel eine dampfförmige, hydrolysierbare Metallverbindung mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse der Metallverbindung und genügend Wärme zur Hydrolysereaktion zur Verfügung. Ein so hergestelltes Metalloxid wird als pyrogenes Metalloxid bezeichnet.

Bei der Herstellung pyrogener Metalloxide mittels Flammhydrolyse ist die Vermischung der Reaktionsgase von Bedeutung.

In DE-A-1293728 wird ein Verfahren offenbart, bei dem alle zugeführten Gase vor dem Eintritt in die Reaktionszone vermischt werden, wobei das Gasgemisch in das schmale Ende einer kegelstumpfförmigen Reaktionskammer eingeführt wird. Offenbart wird auch eine Ausführungsform, bei der ein Silan/Luft-Gemisch und Wasserstoff tangential in einen zylindrischen Brennerkopf eingeführt werden. Der Impuls dieser Ströme erzeugt eine Rotation, die zu einer turbulenten Vermischung der Reaktionsgase führen soll.

In DE-A-3115002 wird eine Mischkammer offenbart, die eine turbulente Strömung erzeugen soll. Dabei werden die Reaktionsgase über zwei Leitungen in die Mischkammer geführt. Das Brennerrohr ist mit strömungskorrigierenden Blechen ausgestattet, die eine störungsfreie Verbrennung gewährleisten sollen.

In US3363980 wird ebenfalls ein Verfahren zu einer turbulente Vermischung der Reaktionsgase mittels mechanisch bewegter Rührpaddel offenbart.

In US2990249 wird offenbart, neben den Reaktionsgasen für die Hydrolyse ein Inertgasstrom einzusetzen. Hierzu wird das Inertgas durch einen Ringschlitz eingeblasen, der an der Brennermündung angeordnet ist und diese vollständig umgibt.

In DE-A-2702896 offenbart ein Einsetzen ein porösen Diffusionsbauteiles in den Brennerkopf. Bei dieser Brennergeometrie kommt es zur Ausbildung von vielen kleinen Flammen.

In WO2003/078321 wird ein weiterer Multibrennertyp offenbart. Dabei werden in einer Brennerdüse Metallchlorid-Dampf und Sauerstoff vermischt und Wasserstoff separat hiervon zum Brennermund geführt.

Der Stand der Technik zeigt, dass der Vermischung der Einsatzstoffe bei der Flammenhydrolyse große Bedeutung zukommt. Die vorgeschlagenen Lösungen sind jedoch apparativ aufwändig, bei festen Einbauten wenig flexibel, bei Einbauten mit bewegten Teilen störanfällig.

Es war daher die technische Aufgabe der vorliegenden Erfindung ein Verfahren zur Herstellung pyrogener Metalloxide bereitzustellen, welches eine konstant homogene Vermischung der Einsatzstoffe erlaubt, apparativ wenig aufwändig und störanfällig ist.

Gegenstand der Erfindung ist ein Verfahren zur Herstellung eines Metalloxidpulvers, bei dem man

a) einen Stoffstrom I enthaltend wenigstens eine dampfförmige, hydrolysierbare Metallverbindung,
b) einen Stoffstrom II enthaltend Sauerstoff und
c) einen Stoffstrom III enthaltend wenigstens ein Brenngas zur Reaktion bringt, wobei man
d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend
e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,
f) den das Rohrstück B verlassenden Stoffstrom V in eine Reaktionskammer einbringt, dort zündet und in einer Flamme umsetzt und
g) den entstandenen Feststoff abtrennt.

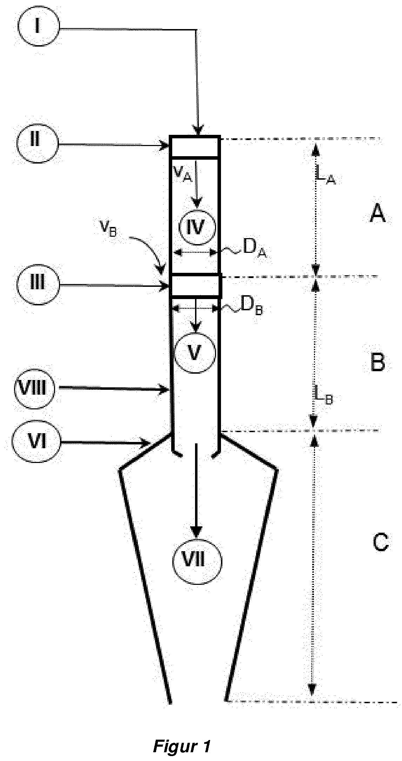

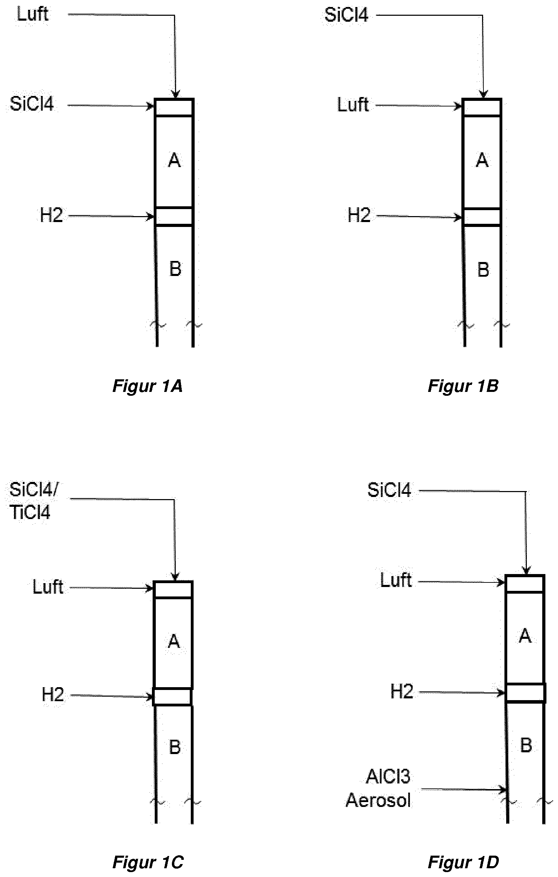

Figur 1 zeigt schematisch dieser Ausführungsform der Erfindung. Dabei gilt:

A, B = Rohrstück A, beziehungsweise Rohrstück B mit der jeweiligen Länge L und dem inneren Durchmesser D;
C = Reaktionskammer;
I - VIII = Stoffströme;

| | |
|---|---|
| Stoffstrom I | enthaltend wenigstens eine dampfförmige, hydrolysierbare Metallverbindung, |
| Stoffstrom II | enthaltend Sauerstoff , |
| Stoffstrom III | enthaltend wenigstens ein Brenngas, |
| Stoffstrom IV | erzeugt, indem man über eine in einem ein oder mehrere statische Mischelemente umfassenden |

Rohrstück A vorgesehene Einspeisestelle den Stoffstrom I in den Stoffstrom II oder umgekehrt einbringt,

Stoffstrom V — erzeugt, indem man über eine in einem ein oder mehrere statische Mischelemente umfassenden Rohrstück B vorgesehene Einspeisestelle in den Stoffstrom IV den Stoffstrom III einbringt,

Stoffstrom VI — enthaltend Sauerstoff und/oder Wasserdampf,

Stoffstrom VII — enthaltend wenigstens die Reaktionsprodukte Metalloxid und Wasser, gegebenenfalls Kohlendioxid und Salzsäure,

Stoffstrom VIII — enthaltend ein Aerosol, erhalten durch Verdüsen einer Lösung einer Metallverbindung,

Die Figuren 1A und 1B zeigen mögliche Ausführungsformen diese Verfahrens Erfindung bezüglich der Stoffströme I bis III. Figur 1A zeigt die Einspeisung des die Metallverbindung, beispielhaft $SiCl_4$, enthaltenden Stoffstromes I in das ein oder mehrere statische Mischelemente umfassende Rohrstück A. Figur 1B zeigt die Einspeisung des den Sauerstoff enthaltenden Stoffstromes II in das ein oder mehrere statische Mischelemente umfassende Rohrstück A. In beiden Fällen erfolgt die Einspeisung des Stoffstromes III in das ein oder mehrere statische Mischelemente umfassende Rohrstück B.

Weiterhin ist ein Verfahren zur Herstellung eines Metalloxidpulvers Gegenstand der Erfindung, bei dem man

a) einen Stoffstrom I enthaltend wenigstens eine dampfförmige, hydrolysierbare Metallverbindung,

b) einen Stoffstrom II enthaltend wenigstens ein Brenngas und

c) einen Stoffstrom III enthaltend Sauerstoff zur Reaktion bringt, wobei man

d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend

e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,

f) den das Rohrstück B verlassenden Stoffstrom V in eine Reaktionskammer einbringt, dort zündet und in einer Flamme umsetzt und

g) den entstandenen Feststoff abtrennt.

Figur 1 zeigt schematisch dieser Ausführungsform der Erfindung. Dabei gilt:

A, B = Rohrstück A, beziehungsweise Rohrstück B mit der jeweiligen Länge L und dem inneren Durchmesser D;
C = Reaktionskammer;
I - VIII = Stoffströme;

Stoffstrom I — enthaltend wenigstens eine dampfförmige, hydrolysierbare Metallverbindung,

Stoffstrom II — enthaltend wenigstens ein Brenngas,

Stoffstrom III — enthaltend Sauerstoff,

Stoffstrom IV — erzeugt, indem man über eine in einem ein oder mehrere statische Mischelemente umfassenden Rohrstück A vorgesehene Einspeisestelle den Stoffstrom I in den Stoffstrom II oder umgekehrt einbringt,

Stoffstrom V — erzeugt, indem man über eine in einem ein oder mehrere statische Mischelemente umfassenden Rohrstück B vorgesehene Einspeisestelle in den Stoffstrom IV den Stoffstrom III einbringt,

Stoffstrom VI — enthaltend Sauerstoff und/oder Wasserdampf,

Stoffstrom VII — enthaltend wenigstens die Reaktionsprodukte Metalloxid und Wasser, gegebenenfalls Kohlendioxid und Salzsäure,

Stoffstrom VIII — enthaltend ein Aerosol, erhalten durch Verdüsen einer Lösung einer Metallverbindung,

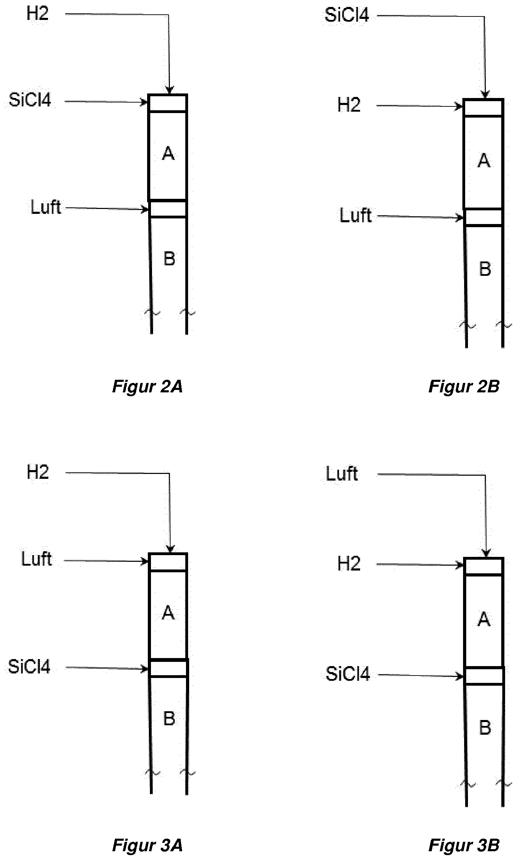

Die Figuren 2A und 2B zeigen mögliche Ausführungsformen dieses Verfahrens bezüglich der Stoffströme I bis III. Figur 2A zeigt die Einspeisung des die Metallverbindung, beispielhaft $SiCl_4$, enthaltenden Stoffstromes I in das ein oder mehrere statische Mischelemente umfassende Rohrstück A. Figur 2B zeigt die Einspeisung des das Brenngas enthaltenden Stoffstromes II in das ein oder mehrere statische Mischelemente umfassende Rohrstück A. In beiden Fällen erfolgt die Einspeisung des Stoffstromes III in das ein oder mehrere statische Mischelemente umfassende Rohrstück B.

Verfahren zur Herstellung eines Metalloxidpulvers, bei dem man

a) einen Stoffstrom I enthaltend Sauerstoff,

b) einen Stoffstrom II enthaltend wenigstens ein Brenngas und

c) einen Stoffstrom III enthaltend wenigstens eine dampfförmige, hydrolysierbare Metallverbindung zur Reaktion bringt, wobei man

d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend

e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,

f) den das Rohrstück B verlassenden Stoffstrom V in eine Reaktionskammer einbringt, dort zündet und in einer Flamme umsetzt und

g) den entstandenen Feststoff abtrennt.

Figur 1 zeigt schematisch dieser Ausführungsform der Erfindung. Dabei gilt:

A, B = Rohrstück A, beziehungsweise Rohrstück B mit der jeweiligen Länge L und dem inneren Durchmesser D;
C = Reaktionskammer;
I - VIII = Stoffströme;

| | |
|---|---|
| Stoffstrom I | enthaltend Sauerstoff, |
| Stoffstrom II | enthaltend wenigstens ein Brenngas, |
| Stoffstrom III | enthaltend wenigstens eine dampfförmige, hydrolysierbare Metallverbindung, |
| Stoffstrom IV | erzeugt, indem man über eine in einem ein oder mehrere statische Mischelemente umfassenden Rohrstück A vorgesehene Einspeisestelle den Stoffstrom I in den Stoffstrom II oder umgekehrt einbringt, |
| Stoffstrom V | erzeugt, indem man über eine in einem ein oder mehrere statische Mischelemente umfassenden Rohrstück B vorgesehene Einspeisestelle in den Stoffstrom IV den Stoffstrom III einbringt, |
| Stoffstrom VI | enthaltend Sauerstoff und/oder Wasserdampf, |
| Stoffstrom VII | enthaltend wenigstens die Reaktionsprodukte Metalloxid und Wasser, gegebenenfalls Kohlendioxid und Salzsäure, |
| Stoffstrom VIII | enthaltend ein Aerosol, erhalten durch Verdüsen einer Lösung einer Metallverbindung, |

Die Figuren 3A und 3B zeigen mögliche Ausführungsformen dieses Verfahrens bezüglich der Stoffströme I bis III. Figur 3A zeigt die Einspeisung des Luft enthaltenden Stoffstromes I in das ein oder mehrere statische Mischelemente umfassende Rohrstück A. Figur 3B zeigt die Einspeisung des das Brenngas enthaltenden Stoffstromes II in das ein oder mehrere statische Mischelemente umfassende Rohrstück A. In beiden Fällen erfolgt die Einspeisung des Stoffstromes III in das ein oder mehrere statische Mischelemente umfassende Rohrstück B.

Bei dem die statischen Mischelemente umfassenden Rohrstück A und/oder B handelt es sich um sogenannte statische Mischer oder Statikmischer, die von den zu mischenden Stoffströmen durchströmt werden. Diese zeichnen sich dadurch aus, dass sie die Bildung von Sekundärströmungen hervorrufen, die sich über größere Bereiche erstrecken. Zusätzlich werden turbulente Bereiche gebildet, die zu einer feineren Vermischung führen. Prinzipiell ist die Auswahl des statischen Mischers nicht beschränkt. Beispiele von gemäß der vorliegenden Erfindung einsetzbarer statischer Mischer finden sich beispielsweise in US4758098 oder US5522661. Dabei können die statischen Mischelemente umfassenden Rohrstücke A und B bezüglich ihrer Dimension und der Art der Mischelemente gleich oder verschieden sein.

Bevorzugt jedoch können im erfindungsgemäßen Verfahren Flanschmischer eingesetzt werden, bei denen stromabwärts nach den statischen Mischelementen Mischvorgänge stattfinden. Ein solcher Flanschmischer ist beispielsweise in US5839828 offenbart, bei dem der einzuspeisende Reaktionsstrom über eine oder mehrere Blenden zugeführt wird.

In EP-A-1153650 wird der einzuspeisende Reaktionsstrom über eine Ringdosiereinrichtung mit einer besonderen Flügelanordnung eingebracht.

Besonders bevorzugt können die Rohrstücke A und/oder B als Flanschmischer wie in EP-A-1302236 offenbart ausgeführt sein. Diese weisen die in EP-A-1153650 offenbarte Flügelanordnung auf, anstelle der Ringdosiereinrichtung ist jedoch eine einzige punktuelle Einspeisestelle vorgesehen.

Ganz besonders bevorzugt ist eine Ausführungsform bei der der in EP-A-1493485 offenbarte statische Mischer eingesetzt wird. Bei diesem handelt es sich um einen statischen Mischer mit in einem Rohrstück angeordneten Einbauten, die flache, gefaltete oder gekrümmte Strömungshindernisse sowie dazwischen liegende Engpässe umfassen, wobei die primären Strömungshindernisse auf ihren Oberflächen und/oder an ihren Rändern geometrisch modifiziert sind, und durch diese Modifikationen in einem ersten Stoffstrom lokale Strömungen zweiter Ordnung induzierbar sind, die sich der Strömung erster Ordnung überlagern und so die Mischgüte verbessern, nämlich derart, dass radiale und axiale Inhomogenitäten im Fluid besser als durch die Strömung erster Ordnung ausgeglichen werden. Der statischer Mischer enthält eine Einspeisestelle für einen weiteren Stoffstrom, die in eine Zone des Mischbereiches der ersten Stoffstromes mündet, in der die Beeinflussung der Strömung durch die geometrischen Modifikationen besonders stark ausgebildet ist. Es wird auf explizit auf die Figur 1 in EP-A-1493485 verwiesen.

In einer besonderen Ausführungsform der Erfindung gilt $L_A/D_A$ = 2 - 20, wobei $L_A$ die Länge des Rohrstückes A und $D_A$ der innere Durchmesser des Rohrstückes A ist. Besonders bevorzugt ist eine Ausführungsform bei der $L_A/D_A$ = 3 - 6 ist.

In einer weiteren besonderen Ausführungsform der Erfindung gilt $L_B/D_B$ = 2 - 20, wobei $L_A$ die Länge des Rohrstückes B und $D_B$ der innere Durchmesser des Rohrstückes B ist. Besonders bevorzugt ist eine Ausführungsform bei der $L_B/D_B$ = 3 - 6 ist.

In einer besonderen Ausführungsform des erfindungsgemäßen Verfahrens gilt, dass die Geschwindigkeit $v_B$ mit der der Stoffstrom III in den Stoffstrom IV eingebracht wird größer ist als die Geschwindigkeit $v_A$ des Stoffstromes IV zum Zeitpunkt des Einbringens des Stoffstromes III ist. Besonders bevorzugt ist eine Ausführungsform bei der $v_B/v_A \geq 4$.

Dies gilt unter der Maßgabe, dass der Stoffstrom I Siliciumverbindungen nicht als alleinige Metallverbindungen enthält. So können Siliciumverbindungen unter der Bedingung $v_B > v_A$ beispielsweise bei der Herstellung von Mischoxiden eingesetzt werden. Die Geschwindigkeit des Stoffstromes I und des Stoffstromes II ist nicht kritisch, solange dafür gesorgt wird, dass der Stoffstrom I im dampfförmigen Zustand verbleibt. Die Maßnahmen hierfür sind dem Fachmann bekannt. Als allgemeine Regel für die vorliegende Erfindung gilt, dass die Geschwindigkeit des Stoffstromes, der über die Einspeisestelle des Rohrstückes A eingebracht wird mindestens doppelt so hoch ist wie die Geschwindigkeit des anderen Stoffstromes sein sollte.

$v_A$ beträgt bevorzugt wenigstens 5 Nm/s. Als besonders geeignet hat sich ein Bereich von 5 bis 100 Nm/s erwiesen. $v_B$ beträgt bevorzugt wenigstens 50 Nm/s. Besonders bevorzugt ist $100 \leq v_B \leq 1500$ Nm/s. Bei den Angaben zur Geschwindigkeit handelt es sich um normierte Geschwindigkeiten. $v_A$ ergibt sich durch Division des Volumenstromes mit der Einheit $Nm^3/h$ und der Querschnittsfläche des Rohrstückes A. $v_B$ ergibt sich durch Division des Volumenstromes mit der Einheit $Nm^3/h$ und der Querschnittsfläche der Einspeisestelle.

Im Rahmen der Erfindung werden Volumina und Geschwindigkeiten normiert angegeben. Dabei steht $Nm^3$ für ein Volumen bei einem Druck von 1,01325 bar und einer Temperatur von 0°C. Nm/s steht für eine aus dem Volumen und einem Querschnitt berechneten normierten Geschwindigkeit.

In der Regel wird das erfindungsgemäße Verfahren so ausgeführt, dass die Menge an Sauerstoff wenigstens ausreicht um die Metallverbindung und das Brenngas umzusetzen. In diesem Fall gilt, dass lambda größer oder gleich 1 ist. Lambda beschreibt das Verhältnis von eingespeistem Sauerstoff zu stöchiometrisch benötigtem Sauerstoff. Die stöchiometrisch benötigte Menge an Sauerstoff, lässt sich am Beispiel der Umsetzung von Siliciumtetrachlorid und Wasserstoff als Brenngas auf die Reaktionsgleichungen $2H_2 + O_2 -> 2H_2O$ und $SiCl_4 + 2H_2O -> SiO_2 + 4HCl$ zurückführen. Beim Einsatz anderer Brenngase und Metallverbindungen sind entsprechende Gleichungen aufzustellen. Gamma beschreibt das Verhältnis von eingespeistem Wasserstoff zu stöchiometrisch benötigtem Wasserstoff. Ein Stoffstrom gemäß der vorliegenden Erfindung umfasst wenigstens eine dampfförmige, hydrolysierbare Metallverbindung. In der Regel umfasst der Stoffstrom weiterhin ein Trägergas, beispielsweise Luft oder ein Inertgas wie Stickstoff.

Ein weiterer Stoffstrom umfasst Sauerstoff. In der Regel wird dies Luft oder mit Sauerstoff angereicherte Luft sein.

Ein weiterer Stoffstrom umfasst oder besteht im wesentlichen aus einem oder mehreren Brenngasen. Diese werden bevorzugt aus der Gruppe bestehend aus Wasserstoff, Methan, Ethan und/oder Propan ausgewählt. Besonders bevorzugt ist Wasserstoff.

Mittels des optionalen Stoffstromes VI kann Sauerstoff und/oder Wasserdampf in die Reaktionskammer eingebracht werden. Hierdurch kann die die Flamme beeinflusst und falls erforderlich stabilisiert werden.

Der Stoffstrom VII umfasst wenigstens die Reaktionsprodukte Metalloxid und Wasser. Je nach Struktur der eingesetzten Metallverbindungen und des Brenngases können Kohlendioxid und Salzsäure hinzukommen.

Die Metallkomponente der eingesetzten dampfförmigen, hydrolysierbaren Metallverbindung ist bevorzugt aus der Gruppe bestehend aus Al, Be, Ce, Fe, Ge, In, Nb, Si, Sn, Ta, Ti, V, W, Zn und Zr ausgewählt. Im Rahmen der Erfindung sollen die Halbmetalle Si und Ge explizit zu den Metallen gerechnet werden. Besonders bevorzugte Metallkomponenten sind Al, Si und Ti.

Die eingesetzte dampfförmige, hydrolysierbare Metallverbindung ist bevorzugt ein Chlorid, ein Nitrat, ein Sulfat, ein Alkoholat, ein Carbonat, ein Carboxylat, ein Acetylacetonat oder ein Carbonyl. Besonders bevorzugt sind Metallchloride.

Das erfindungsgemäße Verfahren sieht auch die Herstellung von Mischoxiden, besonders bevorzugt binären Mischoxiden, vor. Hierzu werden Mischungen von Metallverbindungen entsprechend der gewünschten Anteile im herzustellenden Mischoxid eingesetzt. Unter einem Mischoxid soll ein Pulver verstanden werden, bei dem eine innige Vermischung der Komponenten auf atomarer Ebene vorliegt.

Im erfindungsgemäßen Verfahren ist weiterhin vorgesehen in den Stoffstrom V, der die dampfförmige, hydrolysierbare Metallverbindung, Sauerstoff und Brenngas umfasst, einen Stoffstrom VIII, umfassend ein Aerosol, das durch Verdüsen einer Lösung einer Metallverbindung erhalten wird einzubringen. In Abhängigkeit von der Metallverbindung und ihrer Konzentration werden so Mischoxide erhalten, bei denen die Metallkomponenten weitestgehend homogen verteilt sind oder via Aerosol eingebrachte Metallkomponente weitestgehend auf der Oberfläche des Metalloxides, welches aus dem Stoffstrom V resultiert, vorliegt. Die Konzentration der via Aerosol eingebrachte Metallkomponente liegt im Mischoxid bevorzugt bei 0,01 bis 20 Gew.-%. Bei dieser Metallkomponente handelt es sich bevorzugt um eine ausgewählt aus der Gruppe bestehend aus K, Al, Si, P, Cu, Ag, Zn, Y, La, Ti, V, Mn, Fe, Co, Ru, Ce, Er und Yb. Ganz besonders bevorzugt ist K und Al.

Die Figur 1C zeigt die Einspeisung des den Sauerstoff enthaltenden Stoffstromes II in das ein oder mehrere statische Mischelemente umfassende Rohrstück A. Den die Metallverbindung enthaltenden Stoffstrom I stellt beispielhaft ein Gemisch von $SiCl_4$ und $TiCl_4$ dar. Als Produkt wird ein Silicium-Titan-Mischoxid erhalten.

Figur 1D zeigt die Einspeisung eines Stoffstromes VIII in Form eines $AlCl_3$ enthaltenden Aerosoles dar. Als Produkt wird ein Silicium-Aluminium-Mischoxid erhalten.

Das erfindungsgemäße Verfahren kann weiterhin so ausgeführt werden, dass man in die Reaktionskammer einen Sauerstoff und/oder Wasserdampf enthaltenden Stoffstrom VI führt.

Das erfindungsgemäße Verfahren kann weiterhin so ausgeführt werden, dass das Reaktionsgemisch nach Verlassen der Reaktionskammer und vor der Abtrennung des Feststoffes gekühlt, vorzugsweise auf Temperaturen von 80 bis 250°C, und nachfolgend mit Wasserdampf, vorzugsweise bei Temperaturen von 350 bis 750°C, behandelt wird.

**Beispiele**

Als statische Mischelemente umfassende Rohrstück A und B werden CompaX Mischer der Firma Sulzer eingesetzt.

Beispiel 1: Der Stoffstrom I bestehend aus 5,4 kg/h dampfförmigem Aluminiumchlorid mit einer Geschwindigkeit $v_I$ von 1,6 Nm/s wird über die punktuelle Einspeisestelle mit einem Durchmesser von 3 mm eines CompaX-Mischers A mit $L_A/D_A$ = 5 in einen Stoffstrom II bestehend aus 8,0 Nm³/h Luft gemischt, die eine Geschwindigkeit $v_{II}$ von 314,4 Nm/s aufweist. Die Geschwindigkeit $v_A$ beträgt 16,1 Nm/s. Mittels eines CompaX-Mischers B mit $L_B/D_B$ = 5 , dessen punktuelle Einspeisestelle einen Durchmesser von 1 mm aufweist, werden zu diesem Stoffstrom IV ein Stoffstrom III in Form von 2,50 Nm³/h Wasserstoff eingebracht. Die Geschwindigkeit $v_B$ mit der der Stoffstrom III die punktuelle Einspeisestelle verlässt, beträgt 884,2 Nm/s. Der resultierende Stoffstrom V wird über eine Düse in eine Reaktionskammer eingebracht und dort gezündet. Zusätzlich wird noch der Stoffstrom VI bestehend aus 22 Nm³/h Luft in die Reaktionskammer eingebracht. Der resultierende Stoffstrom VII, der nun Aluminiumoxidpartikel, Salzsäure, Wasserdampf und Luft enthält, wird zunächst auf eine Temperatur von 120 bis 150°C abgekühlt. Nachfolgend wird mittels eines Filters die Kieselsäure abgetrennt und diese bei einer Temperatur von 400 bis 500°C mit Wasserdampf behandelt.

Das Aluminiumoxidpulver weist eine BET-Oberfläche von 128 m²/g auf.

Beispiel 2 wird analog durchgeführt.

Die Beispiele 3 bis 5 zeigen die Herstellung von Mischoxiden. In den Beispielen 3 und 4 werden die Metallverbindungen als Gemisch eingesetzt.

In Beispiel 5 wird das Verfahren so ausgeführt, dass als Stoffstrom VIII ein Aerosol einer Kaliumchloridlösung eingesetzt wird. Das Aerosol wird aus einer 5 prozentigen, wässrigen Kaliumchloridlösung mittels Ultraschallvernebelung mit einer Vernebelungsleistung von 200 g/h Aerosol hergestellt. Das Aerosol wird mittels 3,5 Nm³/h Luft als Traggas, welche in den Gasraum des Behälters der Kaliumchloridlösung geführt wird, aus dem Behälter getragen und durch von außen geheizte Leitungen geführt auf 160°C geheizt und in den Stoffstrom V eingebracht.

Die jeweiligen Betriebseinstellungen sind der Tabelle zu entnehmen.

Das erfindungsgemäße Verfahren führt bei einer sehr homogen Vermischung der Einsatzstoffe und erlaubt eine stabile Prozessführung, die zu sehr geringen Abweichungen bei den Produktparametern führt.

**Tabelle: Betriebsparameter und Stoffeigenschaften**

| Beispiel | | 1 | 2 | 3 | 4 | 5 |
|---|---|---|---|---|---|---|
| Stoffstrom I | | $AlCl_3$ | $TiCl_4$ | $SiCl_4/ TiCl_4$ | $AlCl_3/ SiCl_4$ | $SiCl_4/ KCl^{a)}$ |
| | kg/h | 5,4 | 3 | 8,0/0,2 | 0,9/8,7 | 8,0/0,01 |
| | $v_I$  Nm/s | 1,6 | 0,6 | 1,9 | 2,9 | 1,9 |

(fortgesetzt)

| Beispiel | | 1 | 2 | 3 | 4 | 5 |
|---|---|---|---|---|---|---|
| **Stoffstrom II** | | Luft | Luft | Luft | Luft | Luft |
| | Nm$^3$/h | 8 | 14 | 12,9 | 12,9 | 12,9 |
| $v_{II}$ | Nm/s | 314,4 | 550,2 | 506,9 | 506,9 | 506,9 |
| **Stoffstrom III** | | $H_2$ | $H_2$ | $H_2$ | $H_2$ | $H_2$ |
| | Nm$^3$/h | 2,5 | 2 | 3 | 2,6 | 4,2 |
| **Stoffstrom VI** | | Luft | Luft | Luft | Luft | Luft |
| | Nm$^3$/h | 22 | 15 | 15 | 19 | 20 |
| **$v_A$** | Nm/s | 16,1 | 25,9 | 25,2 | 26,1 | 25,2 |
| **$v_B$** | Nm/s | 884,2 | 707,4 | 1061,0 | 919,6 | 1485,4 |
| **$v_B/v_A$** | | 55,0 | 27,3 | 42,1 | 35,2 | 59,0 |
| $\lambda$ | | 1,34 | 2,93 | 1,49 | 2,12 | 1,10 |
| $\gamma$ | | 1,84 | 2,82 | 1,39 | 1,03 | 2,00 |
| **Metalloxid** | | $Al_2O_3$ | $TiO_2$ | $SiO_2$ / $TiO_2$ | $Al_2O_3$ / $SiO_2$ | $SiO_2$/ $K_2O$ |
| | Gew.-% | 99,9 | 99,9 | 96,4/3,1 | 89,1/10,8 | 99,4/0,5 |
| BET | m$^2$/g | 128 | 90 | 300 | 177 | 205 |
| a) KCl = Stoffstrom VIII | | | | | | |

## Patentansprüche

1. Verfahren zur Herstellung eines Metalloxidpulvers, bei dem man

   a) einen Stoffstrom I enthaltend wenigstens eine dampfförmige, hydrolysierbare Metallverbindung,
   b) einen Stoffstrom II enthaltend Sauerstoff und
   c) einen Stoffstrom III enthaltend wenigstens ein Brenngas
   zur Reaktion bringt,
   **dadurch gekennzeichnet, dass** man
   d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend
   e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,
   f) den das Rohrstück B verlassenden Stoffstrom V in eine Reaktionskammer einbringt, dort zündet und in einer Flamme umsetzt und
   g) den entstandenen Feststoff abtrennt.

2. Verfahren zur Herstellung eines Metalloxidpulvers, bei dem man

   a) einen Stoffstrom I enthaltend wenigstens eine dampfförmige, hydrolysierbare Metallverbindung,
   b) einen Stoffstrom II enthaltend wenigstens ein Brenngas und
   c) einen Stoffstrom III enthaltend Sauerstoff
   zur Reaktion bringt,
   **dadurch gekennzeichnet, dass** man
   d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend
   e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,

f) den das Rohrstück B verlassenden Stoffstrom V in eine Reaktionskammer einbringt, dort zündet und in einer Flamme umsetzt und

g) den entstandenen Feststoff abtrennt.

**3.** Verfahren zur Herstellung eines Metalloxidpulvers, bei dem man

a) einen Stoffstrom I enthaltend Sauerstoff,

b) einen Stoffstrom II enthaltend wenigstens ein Brenngas und

c) einen Stoffstrom III enthaltend wenigstens eine dampfförmige, hydrolysierbare Metallverbindung zur Reaktion bringt,

**dadurch gekennzeichnet, dass** man

d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend

e) über eine in einem Rohrstück B vorgesehenen Einspeisestelle, wobei das Rohrstück B ein oder mehrere statische Mischelemente umfasst, in den Stoffstrom IV den Stoffstrom III einbringt und dadurch den Stoffstrom V erzeugt,

f) den das Rohrstück B verlassenden Stoffstrom V in eine Reaktionskammer einbringt, dort zündet und in einer Flamme umsetzt und

g) den entstandenen Feststoff abtrennt.

**4.** Verfahren nach den Ansprüchen 1 bis 3, **dadurch gekennzeichnet, dass** das statische Mischelemente umfassende Rohrstück als Flanschmischer ausgelegt ist.

**5.** Verfahren nach Anspruch 4, **dadurch gekennzeichnet, dass** der Flanschmischer eine einzige punktuelle Einspeisestelle aufweist.

**6.** Verfahren nach den Ansprüchen 1 bis 5, **dadurch gekennzeichnet, dass** die Geschwindigkeit $v_B$ mit der der Stoffstrom III in den Stoffstrom IV eingebracht wird größer ist als die Geschwindigkeit $v_A$ des Stoffstromes IV zum Zeitpunkt des Einbringens des Stoffstromes III ist, mit der Maßgabe, dass der Stoffstrom I nicht nur Siliciumverbindungen als alleinige Metallverbindung enthält.

**7.** Verfahren nach Anspruch 6, **dadurch gekennzeichnet, dass** $v_A$ wenigstens 5 Nm/s beträgt.

**8.** Verfahren nach Anspruch 6, **dadurch gekennzeichnet, dass** $v_B \geq 50$ Nm/s ist.

**9.** Verfahren nach den Ansprüchen 1 bis 8, **dadurch gekennzeichnet, dass** $L_A/D_A$ = 2 - 20 ist, mit $L_A$ = Länge des Rohrstückes A und $D_A$ = innerer Durchmesser des Rohrstückes A.

**10.** Verfahren nach den Ansprüchen 1 bis 9, **dadurch gekennzeichnet, dass** $L_B/D_B$ = 2 - 20 ist, mit $L_B$ = Länge des Rohrstückes B und $D_B$ = innerer Durchmesser des Rohrstückes B.

**11.** Verfahren nach den Ansprüchen 1 bis 10, **dadurch gekennzeichnet, dass** die Menge an Sauerstoff wenigstens ausreicht um die Metallverbindung und das Brenngas umzusetzen.

**12.** Verfahren nach den Ansprüchen 1 bis 11, **dadurch gekennzeichnet, dass** die Metallkomponente der eingesetzten dampfförmigen, hydrolysierbaren Metallverbindung aus der Gruppe bestehend aus Al, Be, Ce, Fe, Ge, In, Nb, Si, Sn, Ta, Ti, V, W, Zn und Zr ausgewählt ist.

**13.** Verfahren nach den Ansprüchen 1 bis 12, **dadurch gekennzeichnet, dass** die eingesetzte dampfförmige, hydrolysierbare Metallverbindung ein Chlorid, ein Nitrat, ein Sulfat, ein Alkoholat, ein Carbonat, ein Carboxylat, ein Acetylacetonat oder ein Carbonyl ist.

**14.** Verfahren nach den Ansprüchen 1 bis 13, **dadurch gekennzeichnet, dass** in den Stoffstrom V ein Stoffstrom VIII umfassend ein Aerosol einer Metallverbindung eingebracht wird.

**15.** Verfahren nach den Ansprüchen 1 bis 14, **dadurch gekennzeichnet, dass** man in die Reaktionskammer einen Sauerstoff und/oder Wasserdampf enthaltenden Stoffstrom VI führt.

**16.** Verfahren nach den Ansprüchen 1 bis 15, **dadurch gekennzeichnet, dass** es als weitere Reaktionsschritte eine Kühlung des Reaktionsgemisches und eine Behandlung mit Wasserdampf umfasst.


**Claims**

**1.** Method for producing a metal oxide powder in which

a) a material stream I containing vaporous hydrolysable metal compound,
b) a material stream II containing oxygen and
c) a material stream III containing at least one fuel gas
are brought to reaction,
**characterized in that**
d) via a feed-in point provided in a pipe piece A, wherein the pipe piece A comprises one or more static mixer elements, the material stream I is introduced into the material stream II, or vice versa, and thereby generates the material stream IV, then
e) via a feed-in point provided in a pipe piece B, wherein the pipe piece B comprises one or more static mixer elements, the material stream III is introduced into the material stream IV and thereby generates the material stream V,
f) the material stream V leaving the pipe piece B is introduced into a reaction chamber, ignited there and converted into a flame and
g) the resultant solids are separated off.

**2.** Method for producing a metal oxide powder in which

a) a material stream I containing at least one vaporous hydrolysable metal compound,
b) a material stream II containing at least one fuel gas and
c) a material stream III containing oxygen
are brought to reaction,
**characterized in that**
d) via a feed-in point provided in a pipe piece A, wherein the pipe piece A comprises one or more static mixer elements, the material stream I is introduced into the material stream II, or vice versa, and thereby generates the material stream IV, then
e) via a feed-in point provided in a pipe piece B, wherein the pipe piece B comprises one or more static mixer elements, the material stream III is introduced into the material stream IV and thereby generates the material stream V,
f) the material stream V leaving the pipe piece B is introduced into a reaction chamber, ignited there and converted into a flame and
g) the resultant solids are separated off.

**3.** Method for producing a metal oxide powder in which

a) a material stream I containing oxygen,
b) a material stream II containing at least one fuel gas and
c) a material stream III containing at least one vaporous hydrolysable metal compound
are brought to reaction,
**characterized in that**
d) via a feed-in point provided in a pipe piece A, wherein the pipe piece A comprises one or more static mixer elements, the material stream I is introduced into the material stream II, or vice versa, and thereby generates the material stream IV, then
e) via a feed-in point provided in a pipe piece B, wherein the pipe piece B comprises one or more static mixer elements, the material stream III is introduced into the material stream IV and thereby generates the material stream V,
f) the material stream V leaving the pipe piece B is introduced into a reaction chamber, ignited there and converted into a flame and

g) the resultant solids are separated off.

4. Method according to Claims 1 to 3, **characterized in that**
the pipe piece comprising static mixer elements is designed as a flange mixer.

5. Method according to Claim 4, **characterized in that** the flange mixer has a single isolated feed-in point.

6. Method according to Claims 1 to 5, **characterized in that**
the velocity $v_B$ with which the material stream III is introduced into the material stream IV is greater than the velocity $v_A$ of the material stream IV at the time point of the introduction of material stream III, with the proviso that the material stream I does not contain silicon compounds as sole metal compound.

7. Method according to Claim 6, **characterized in that** $v_A$ is at least 5 Nm/s.

8. Method according to Claim 6, **characterized in that** $v_B$ is $\geq$ 50 Nm/s.

9. Method according to Claims 1 to 8, **characterized in that**

$$L_A/D_A \text{ is } = 2\text{-}20,$$

where $L_A$ = length of the pipe piece A and $D_A$ = inner diameter of the pipe piece A.

10. Method according to Claims 1 to 9, **characterized in that**

$$L_B/D_B \text{ is } = 2\text{-}20,$$

where $L_B$ = length of the pipe piece B and $D_B$ = inner diameter of the pipe piece B.

11. Method according to Claims 1 to 10, **characterized in that**
the amount of oxygen is at least sufficient in order to convert the metal compound and the fuel gas.

12. Method according to Claims 1 to 11, **characterized in that**
the metal component of the vaporous hydrolysable metal compound used is selected from the group consisting of Al, Be, Ce, Fe, Ge, In, Nb, Si, Sn, Ta, Ti, V, W, Zn and Zr.

13. Method according to Claims 1 to 12, **characterized in that**
the vaporous hydrolysable metal compound used is a chloride, a nitrate, a sulphate, an alkoholate, a carbonate, a carboxylate, an acetylacetonate, or a carbonyl.

14. Method according to Claims 1 to 13, **characterized in that**
a material stream VIII comprising an aerosol of a metal compound is introduced into the material stream V.

15. Method according to Claims 1 to 14, **characterized in that**
a material stream VI containing oxygen and/or steam is conducted into the reaction chamber.

16. Method according to Claims 1 to 15, **characterized in that**
as further reaction steps, it comprises a cooling of the reaction mixture and a treatment with steam.

**Revendications**

1. Procédé pour la préparation d'une poudre d'oxyde métallique, dans lequel on fait réagir

a) un flux de substances I contenant au moins un composé métallique hydrolysable sous forme de vapeur,
b) un flux de substances II contenant de l'oxygène et

c) un flux de substances III contenant au moins un gaz combustible,
**caractérisé en ce que**
d) on introduit le flux de substances I dans le flux de substances II ou inversement via un site d'injection prévu dans une pièce tubulaire A, la pièce tubulaire A comprenant un ou plusieurs éléments de mélange statiques, et on obtient ainsi le flux de substances IV, ensuite
e) on introduit le flux de substances III dans le flux de substances IV via un site d'injection prévu dans une pièce tubulaire B, la pièce tubulaire B comprenant un ou plusieurs éléments de mélange statiques, et on obtient ainsi le flux de substances V,
f) on introduit le flux de substances V qui quitte la pièce tubulaire B dans une chambre de réaction, on l'enflamme et on le fait réagir dans une flamme et
g) on sépare le solide formé.

2. Procédé pour la préparation d'une poudre d'oxyde métallique, dans lequel on fait réagir

    a) un flux de substances I contenant au moins un composé métallique hydrolysable sous forme de vapeur,
    b) un flux de substances II contenant au moins un gaz combustible et
    c) un flux de substances III contenant de l'oxygène, **caractérisé en ce que**
    d) on introduit le flux de substances I dans le flux de substances II ou inversement via un site d'injection prévu dans une pièce tubulaire A, la pièce tubulaire A comprenant un ou plusieurs éléments de mélange statiques, et on obtient ainsi le flux de substances IV, ensuite
    e) on introduit le flux de substances III dans le flux de substances IV via un site d'injection prévu dans une pièce tubulaire B, la pièce tubulaire B comprenant un ou plusieurs éléments de mélange statiques, et on obtient ainsi le flux de substances V,
    f) on introduit le flux de substances V qui quitte la pièce tubulaire B dans une chambre de réaction, on l'enflamme et on le fait réagir dans une flamme et
    g) on sépare le solide formé.

3. Procédé pour la préparation d'une poudre d'oxyde métallique, dans lequel on fait réagir

    a) un flux de substances I contenant de l'oxygène,
    b) un flux de substances II contenant au moins un gaz combustible et
    c) un flux de substances III contenant au moins un composé métallique hydrolysable sous forme de vapeur,
    **caractérisé en ce que**
    d) on introduit le flux de substances I dans le flux de substances II ou inversement via un site d'injection prévu dans une pièce tubulaire A, la pièce tubulaire A comprenant un ou plusieurs éléments de mélange statiques, et on obtient ainsi le flux de substances IV, ensuite
    e) on introduit le flux de substances III dans le flux de substances IV via un site d'injection prévu dans une pièce tubulaire B, la pièce tubulaire B comprenant un ou plusieurs éléments de mélange statiques, et on obtient ainsi le flux de substances V,
    f) on introduit le flux de substances V qui quitte la pièce tubulaire B dans une chambre de réaction, on l'enflamme et on le fait réagir dans une flamme et
    g) on sépare le solide formé.

4. Procédé selon les revendications 1 à 3, **caractérisé en ce que** la pièce tubulaire comprenant des éléments de mélange statiques est conçue sous forme de mélangeur à bride.

5. Procédé selon la revendication 4, **caractérisé en ce que** le mélangeur à bride présente un seul site d'injection ponctuel.

6. Procédé selon les revendications 1 à 5, **caractérisé en ce que** la vitesse $v_B$ à laquelle le flux de substances III est introduit dans le flux de substances IV est supérieure à la vitesse $v_A$ du flux de substances IV au moment de l'introduction du flux de substances III, sous réserve que le flux de substances I ne contient pas uniquement des composés siliciés comme composé métallique unique.

7. Procédé selon la revendication 6, **caractérisé en ce que** $v_A$ est d'au moins 5 Nm/s.

8. Procédé selon la revendication 6, **caractérisé en ce que** $v_B$ est $\geq$ 50 Nm/s.

9. Procédé selon les revendications 1 à 8, **caractérisé en ce que** $L_A/D_A$ = 2-20, avec $L_A$ = longueur de la pièce tubulaire A et $D_A$ = diamètre interne de la pièce tubulaire A.

10. Procédé selon les revendications 1 à 9, **caractérisé en ce que** $L_B/D_B$ = 2-20, avec $L_B$ = longueur de la pièce tubulaire B et $D_B$ = diamètre interne de la pièce tubulaire B.

11. Procédé selon les revendications 1 à 10, **caractérisé en ce que** la quantité d'oxygène est au moins suffisante pour faire réagir le composé métallique et le gaz combustible.

12. Procédé selon les revendications 1 à 11, **caractérisé en ce que** le composant métallique du composé métallique hydrolysable sous forme de vapeur utilisé est choisi dans le groupe constitué par Al, Be, Ce, Fe, Ge, In, Nb, Si, Sn, Ta, Ti, V, W, Zn et Zr.

13. Procédé selon les revendications 1 à 12, **caractérisé en ce que** le composé métallique hydrolysable sous forme de vapeur utilisé est un chlorure, un nitrate, un sulfate, un alcoolate, un carbonate, un carboxylate, un acétylacétonate ou un carbonyle.

14. Procédé selon les revendications 1 à 13, **caractérisé en ce qu'**un flux de substances VIII comprenant un aérosol d'un composé métallique est introduit dans le flux de substances V.

15. Procédé selon les revendications 1 à 14, **caractérisé en ce qu'**on fait passer un flux de substances VI contenant de l'oxygène et/ou de la vapeur d'eau dans la chambre de réaction.

16. Procédé selon les revendications 1 à 15, **caractérisé en ce qu'**il comprend, comme autres étapes de réaction, un refroidissement du mélange réactionnel et un traitement par de la vapeur d'eau.

*Figur 1*

*Figur 1A*

*Figur 1B*

*Figur 1C*

*Figur 1D*

Figur 2A

Figur 2B

Figur 3A

Figur 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1293728 A
- DE 3115002 A
- US 3363980 A
- US 2990249 A
- DE 2702896 A
- WO 2003078321 A
- US 4758098 A
- US 5522661 A
- US 5839828 A
- EP 1153650 A
- EP 1302236 A
- EP 1493485 A